(19) Europäisches Patentamt
European Patent Office
Office européen des brevets

(11) **EP 3 242 445 B1**

(12) **EUROPEAN PATENT SPECIFICATION**

(45) Date of publication and mention
of the grant of the patent:
**19.08.2020 Bulletin 2020/34**

(51) Int Cl.:
*H04L 12/42* *(2006.01)*       *H04L 12/427* *(2006.01)*

(21) Application number: **16834877.9**

(86) International application number:
**PCT/JP2016/069040**

(22) Date of filing: **27.06.2016**

(87) International publication number:
**WO 2017/026180 (16.02.2017 Gazette 2017/07)**

(54) **CONTROL NETWORK SYSTEM AND NODE DEVICE THEREOF**

NETZWERKSTEUERUNGSSYSTEM UND KNOTENVORRICHTUNG DAFÜR

SYSTÈME DE RÉSEAU DE COMMANDE ET DISPOSITIF DE NOEUD ASSOCIÉ

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **12.08.2015 JP 2015159659**

(43) Date of publication of application:
**08.11.2017 Bulletin 2017/45**

(73) Proprietor: **Fuji Electric Co., Ltd.**
**Kawasaki-shi,**
**Kanagawa 210-9530 (JP)**

(72) Inventor: **KUBOSUMI, Hajime**
**Kawasaki-shi**
**Kanagawa 210-9530 (JP)**

(74) Representative: **MERH-IP Matias Erny Reichl
Hoffmann
Patentanwälte PartG mbB
Paul-Heyse-Strasse 29
80336 München (DE)**

(56) References cited:
**EP-A1- 2 410 697       JP-A- H1 188 388
JP-A- 2013 172 442       JP-A- 2013 207 457
US-A1- 2002 126 661**

**Description**

**Technical Field**

The present invention relates to a control network system in which a plurality of node devices are connected to each other via communication lines and exchange data in every prescribed cycle.

**Background Art**

In a control network system (such as a plant control transmission system), respective devices (nodes) that configure the system need to mutually exchange large-capacity data in a state in which a property of being in real time is assured. Assuring a property of being in real time means, for example, that data exchange among all devices that need to exchange data is completed within each period in a prescribed cycle. Each of the devices needs to collect data indicating a state and the like of the local device at a certain point in time and to transmit the data to the other devices, for example, in a prescribed cycle. In other words, each of the devices obtains state data and the like of the other devices, and performs certain prescribed processing by using the obtained data, for example, in a prescribed cycle.

Each of the devices (nodes) is, for example, a device that manages a certain machine to be controlled, and collects data (temperature, pressure, the number of rotations, and the like) that indicates, for example, a current state of a control management machine, as needed. It is assumed that the data collected by the respective devices (nodes) needs to be shared by all of the devices (nodes).

When employing a transmission scheme for performing mutual access as an event in response to the generation of an access request by an application installed in each of the devices (nodes), a network load depends on the application, and a property of being in real time cannot be assured. Accordingly, a data exchange scheme that assures a property of being in real time is realized by using a transmission scheme for providing a virtual shared memory (common memory) in each of the devices, and for causing each of the devices to transmit data of the local node to all of the nodes on a network in time division multiplexing (at timings different from each other) in each communication cycle (in each scanning time). Each of the nodes updates data in a corresponding area of the common memory by using the received data, and the application accesses the common memory, obtains current data of another node, and performs certain processing using the current data.

Various methods have been proposed as an efficient broadcast communication method on a network for realizing the data exchange. Examples of the efficient broadcast communication method include the invention described in Patent Document 1.

The invention described in Patent Document 1 realizes a highly efficient transmission that prevents timings of transmission from respective nodes from overlapping each other by combining a time division multiplexing access scheme using an integrated timer in each of the nodes with the correction of integrated timers in slave nodes by using a synchronization frame from the master node.

A conventional technology substantially similar to the technology described in Patent Document 1 has been disclosed, for example, in Patent Document 2.

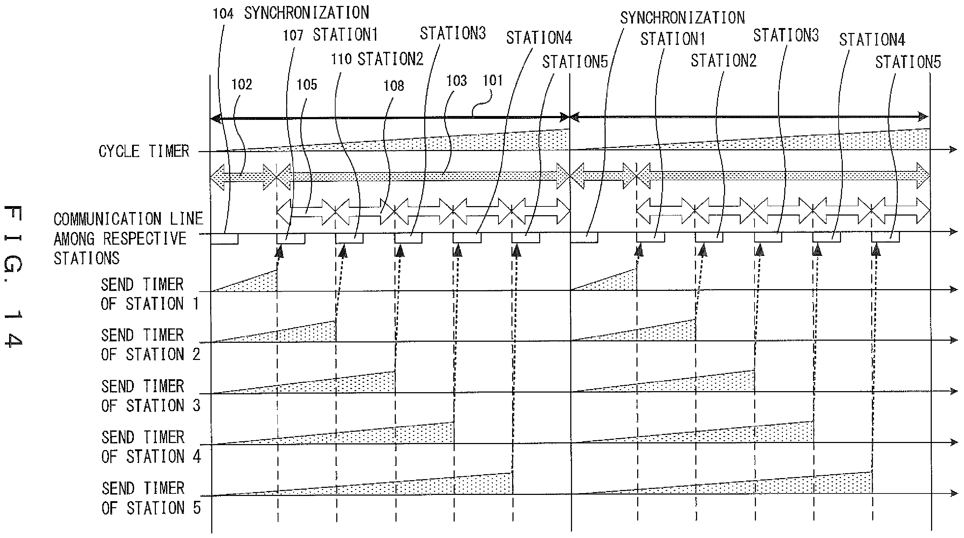

FIG. 14 illustrates a specific example of data exchange using a conventional method described, for example, in Patent Document 1 or 2 described above.

In this conventional method, each station (node) includes two types of timers, a cycle timer and a send timer. The cycle timer is a timer that generates a data exchange cycle (a scanning time), and the same time is set in all of the stations. In the conventional method, the cycle timers in all of the stations are attempted to be synchronized with each other by using a synchronization frame, but this is not particularly described.

The send timer is a timer that generates a data transmission timing in each of the stations, and values different from each other are set in all of the stations. The send timer is started when time-up occurs in the cycle timer, and time-up occurs in the send timer at a timing according to the setting value, and therefore time-up occurs at timings different from each other in all of the stations. Consequently, data transmission timings in all of the stations are different from each other, as illustrated in FIG. 14, for example

The specific example of FIG. 14 is described.

A scanning time 101 that is a data exchange cycle (a communication cycle) is generated by the cycle timer, as illustrated. The scanning time 101 is configured by the illustrated TC band 102 used to adjust the time and the illustrated TS band 103 used to exchange data. The TC band and the TS band are as described, for example, in Patent Document 2, and they are not particularly described here.

As an example, in the TC band, a synchronization frame 104 for time synchronization is transmitted onto a transmission line by a master node, and consequently, cycle timers in respective slave nodes are synchronized with each other, by using, for example, a node synchronization method described in Patent Document 2 or the like. In the TS band, each of the nodes broadcasts data of the local station onto a communication route at a transmission timing allocated to the local station. In each of the nodes, a send timer in the local station is started at a start timing in each communication cycle in accordance with a cycle timer in the local station. A time-up timing in the send timer is the transmission timing above.

Consequently, as illustrated in FIG. 14, time-up occurs in the send timer at timings different from each other in all of the stations, and frame data (107, 110, or the like) is broadcast onto a not-illustrated communication route at timings different from each other. In other words, transmission time slots (105, 108, and the like) different from each other with respect to the scanning time 101 in time division are allocated to the respective stations.

In the invention described in Patent Document 1, a transmission line is configured as a network connected using a bus or a serial cable. In recent years, application of Ethernet has also been progressing in industrial networks, and in regard to cooperation with information system equipment, Ethernet is becoming mainstream in a controller-level network.

Patent Document 3 discloses a communication network interconnecting a plurality of synchronized nodes, where regular frames comprising time-critical data are transmitted periodically or cyclically, and sporadic frames are transmitted non-periodically or occasionally. In particular, each node of the plurality of nodes transmits a regular frame at the beginning of a transmission period common to, and synchronized among, all nodes.

Patent Document 4 describes a network switch which routes switch packets among nodes with input and output ports. The nodes are connected together in a loop by two buses. One bus sends packets in a clockwise direction around the loop of nodes, while the other bus sends packets in a counter-clockwise direction around the loop. Each bus is divided into links between adjacent nodes, which examine and forward the packets to the next node in the loop. A packet is duplicated and injected onto both buses from a source node, reaching half of the nodes in one direction, and the other nodes in the opposite direction.

Patent Document 1: Japanese Laid-Open Patent Publication No. 2005-159754
Patent Document 2: International Publication Pamphlet No. WO 2013/121568
Patent Document 3: European Patent Application Publication No. EP 2410697 A1
Patent Document 4: United States Patent Application Publication No. US 2002/126661 A1

Disclosure of Invention

In the conventional method described in Patent Document 1, Patent Document 2, or the like, a physical layer is a cascade using a bus or a serial cable, and data can be transmitted to all other stations at a single time by broadcasting. It is conceivable that data transmitted by broadcasting will be received in respective nodes at the same timing or with substantially ignorable time differences.

In a case in which a full-duplex line or the like that uses Ethernet, such as 100BASE-TX or 1000BASE-T, and that has a ring-type topology or a line-type topology is employed as a transmission line, each station (node) is configured to perform transmission under the assumption of relaying using one or more stations between the local station and a communication partner station in order to perform communication with a station other than an adjacent station. Stated another way, in the case of this configuration, each of the stations can perform direct communication with only adjacent station. In a case in which frame data transmitted from an adjacent station is not addressed to the local station, a certain node relays the frame data to another adjacent station. By repeating this relay, the frame data finally reaches a destination station.

The adjacent station is another station that is directly connected to the local station via a communication line. Because the full-duplex line is employed, two communication lines, an upstream communication line and a downstream communication line, are provided. Stated another way, a communication line used to transmit data from the local station to an adjacent station and a communication line used to receive data transmitted from an adjacent station are provided.

In general, in a case in which frame data is relayed to an adjacent node by using an FW, an LSI, or the like, a certain relay delay is generated. Therefore, in a case in which frame data of an arbitrary node is broadcast to all of the nodes, the time "number of configuration nodes - 1" $\times$ relay delay time + transmission time" is required at maximum.

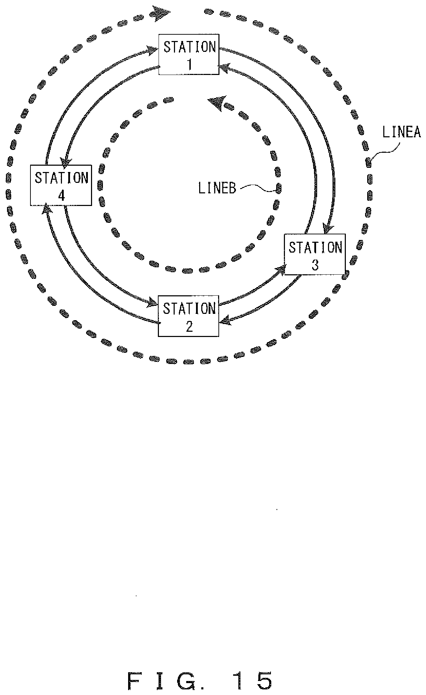

FIG. 15 illustrates a specific example of a control network system using a full-duplex line that has a ring-type topology.

In the illustrated example, four nodes (station 1, station 2, station 3, and station 4) are connected to each other by using two communication lines, the upstream communication line and the downstream communication line described above, so as to have a ring form, as illustrated. It is assumed that a clockwise communication route in the entirety of a network is line A and that a counterclockwise communication route is line B. In the case of line A, as an example, transmission data from station 1 is sequentially relayed by station 3, station 2, and station 4, and returns to station 1 through a route of station 1 → station 3 → station 2 → station 4 → station 1. Similarly, in the case of line B, as an example, transmission data from station 1 is sequentially relayed by station 4, station 2, and station 3, and returns to station 1 through a route of station 1 → station 4 → station 2 → station 3 → station 1.

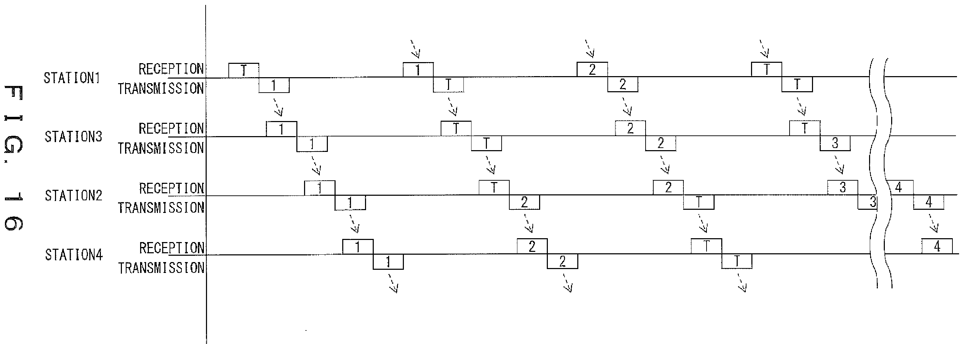

FIG. 16 illustrates an example of an operation of a control network system using a conventional communication scheme in the system of FIG. 15. FIG. 16 illustrates an example of an operation on line A described above, but an operation on line B is substantially similar to the operation on line A.

As described above, in a control network system, each of the stations need to transmit data of the local station to the other stations within each scanning time in a prescribed cycle. FIG. 16 illustrates an example of an operation in a case in which the operation above is implemented, for example, in the configuration illustrated in FIG. 15 having a ring-type topology.

The example of FIG. 16 illustrates a token scheme. A station that obtains a token (a transmission right) can transmit data of the local station, and the other stations receive and relay the data.

In the illustrated example, station 1 first obtains a token, and transmits data of the local station to a downstream adjacent station. The downstream adjacent station is station 3 in the case of line A in the configuration of FIG. 15. In the case of line A in the configuration of FIG. 15, an adjacent station on an upstream side of station 1 is station 4. In FIG. 16, a rectangle indicates a transmission/reception data frame (a packet), and in each station, an upper side indicates reception, and a lower side indicates transmission. A horizontal axis indicates time. A number in the rectangle indicates a station that is a transmission source, and as an example, '1' indicates that a transmission source is station 1, and a packet transmitted from station 1 is referred to as the packet 'station 1'. Station 1, which obtains the token, transmits the packet 'station 1' to station 3. 'T' in a rectangle indicates a token.

Upon receipt of the packet 'station 1', station 3 obtains and relays the packet to a downstream adjacent station (station 2). Similarly, station 2, which receives the packet 'station 1', obtains and relays the packet to a downstream adjacent station (station 4). Similarly, station 4, which receives the packet 'station 1', obtains and relays the packet to a downstream adjacent station (station 1).

By doing this, station 1 receives a transmission data frame of the local station, and releases the token. In this example, it is assumed that the token includes authority station information, and that an authority station is updated upon release. In this example, assume that the authority station is updated in every release such that '1'→'2'→'3'→'4'→'1'→'2'→. Here, assume that the authority station is updated to '2' when station 1 releases the token.

As a result of this, Station 3, which is an adjacent station on a downstream side of station 1, receives the token, but an authority station is not station 3, and therefore station 3 relays the token to station 2, which is an adjacent station on a downstream side of station 3. Station 2 is an authority station. Therefore, upon receipt of the token, station 2, which has obtained a transmission right, transmits data of the local station (the packet 'station 2'). Namely, station 2 transmits the packet to station 4, which is an adjacent station on a downstream side of station 2. Substantially similarly to the packet 'station 1', the packet 'station 2' is sequentially received and relayed in the order of station 2 → station 4 → station 1 → station 3, and station 2 finally receives transmission data of the local station. Accordingly, station 2 releases the token.

Thereafter, when each of station 3 and station 4 obtains the token, and obtains a transmission right, each of station 3 and station 4 transmits data of the local station, and the data is sequentially relayed by the other stations, and returns to the local station.

By doing this, each of stations 1, 2, 3, and 4 transmits data of the local station, and all stations other than the local station receive and obtain the data. Namely, each of the stations transmits data of the local station to all stations other than the local station.

In the control network system, data exchange among all stations (nodes) that need to exchange data needs to be completed, for example, within a time period (a scanning time), that is time from when a cycle timer is started to when time-up occurs , for example, in a prescribed cycle. Namely, each of the stations needs to transmit data of the local station to all stations other than the local station. When this operation is attempted to be implemented in a network having a ring-type topology, for example, by using the token scheme, the operation above illustrated in FIG. 16 is performed. Stated another way, when the time required for a transmission packet to circulate (the time required for the packet to return to the local station) for each station is Ta, and the number of stations is M, at least the time "Ta × M" is required. Namely, it takes a very long time, and the scanning time needs to be set to be very long. In other words, a problem arises wherein a data exchange cycle becomes long.

An object of the present invention is to provide a control network system in which all node devices connected to a network mutually exchange data, the control network system enabling a transmission efficiency to be improved, and enabling data exchange to be completed in a shorter time than is conventional, to provide a node device thereof, and the like.

Said object is achieved by a control network system according to the present invention as specified in independent claim 1.

**Brief Description of Drawings**

FIG. 1(a) and FIG. 1(b) illustrate the entire configuration of a control network system in this example.

FIG. 2(a) and FIG. 2(b) are flowcharts (no. 1) illustrating the processing of a driver of a node.

FIG. 3 is a flowchart (no. 2) illustrating the processing of a driver of a node.

FIG. 4 is a flowchart (no. 3) illustrating the processing of a driver of a node.

FIG. 5 is a flowchart illustrating the processing of a processing unit of a node.

FIG. 6 illustrates an operation relating to transmission of local data in a network system according to the present method.

FIG. 7 illustrates a data transmission/reception operation (no. 1) in the entirety of a system according to the present method.

FIG. 8 illustrates a data transmission/reception operation (no. 2) in the entirety of a system according to the present method.

FIG. 9 (a) and FIG. 9(b) illustrate images of the processes of steps S21, S23, S24, and S26.

FIG. 10 illustrates another example of the topology of the control network system in this example.

FIG. 11 is a functional block diagram of the control network system in this example.

FIG. 12 illustrates an exemplary configuration of a line-type control network system using a full-duplex line.

FIG. 13 illustrates an exemplary configuration of a ring-type control network system using a single line.

FIG. 14 illustrates a specific example of data exchange according to a conventional method.

FIG. 15 illustrates a specific example of a control network system using a full-duplex line that has a ring-type topology.

FIG. 16 illustrates an example of an operation of a control network system using a conventional communication scheme in the system of FIG. 15.

**Description of Embodiments**

Embodiments of the present invention are described below with reference to the drawings.

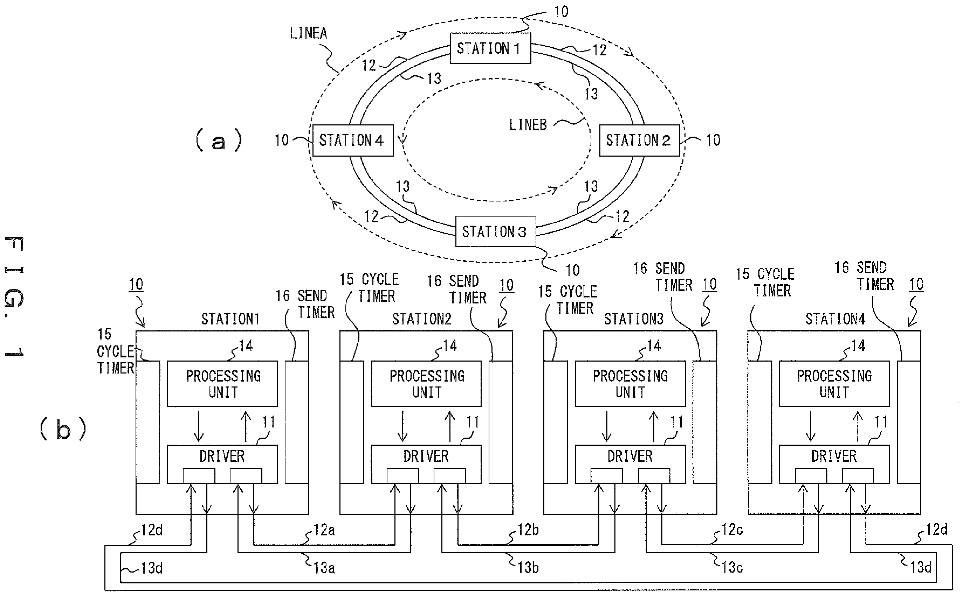

FIG. 1(a) and FIG. 1(b) illustrate the entire configuration of a control network system in this example.

In FIG. 1, a network system that uses a full-duplex line or the like and has a ring-type topology is used as an example, but the configuration of a control network system in this example is not limited to this example. As an example, the control network system may have a line-type topology, not a ring-type topology, or may have another type of topology illustrated later. The full-duplex line is not always used, and as an example, twice the number of lines in the full-duplex line (referred to as a full-quadruplex line) may be used, or a single line may be used. In addition, FIG. 1 illustrates an example in which four configuration nodes exist, but of course, the control network system is not limited to this example.

As described above, in the control network system in this example, respective devices (nodes) that configure the system need to mutually exchange data, and data needs to be exchanged in a state in which a property of being in real time is assured. Therefore, data exchange among all of the nodes needs to be completed, for example, within a time period (a scanning time) in a data exchange cycle defined by the cycle timer. Namely, it is assumed that each of the nodes needs to transmit data of the local node to all nodes other than the local node within the scanning time. In other words, it is assumed that respective devices (stations; nodes) that configure the system need to mutually exchange data in a state in which a property of being in real time is assured, as described above.

In a control network system in the example illustrated in FIG. 1(a), similarly to FIG. 15 described above, four illustrated nodes 10 (station 1, station 2, station 3, and station 4) are connected to each other via full-duplex communication lines 12 and 13, and it is assumed that a clockwise communication route in the entirety of the network is line A, and that a counterclockwise communication route is line B. As described with reference to FIG. 15, the communication lines 12 and 13 are, for example, an upstream communication line and a downstream communication line, and as an example, in communication between station 1 and station 2, station 1 transmits data to station 2 on the communication line 12, and station 2 transmits data to station 1 on the communication line 13.

More specifically, as illustrated in FIG. 1(b), each of the nodes 10 includes, for example, a driver 11, and each of the communication line 12 (12a, 12b, 12c, and 12d) relating to line A described above and the communication line 13 (13a, 13b, 13c, and 13d) relating to line B described above is connected to the driver 11 of each of the nodes 10, as illustrated.

Here, each of the communication lines 12 and 13 is not configured by one communication line (a serial line or the like), but is configured by a plurality of communication lines (serial lines or the like). Namely, as an example, the communication line 12 is configured by illustrated communication lines 12a, 12b, 12c, and 12d. Each of the communication lines connects two arbitrary nodes 10. In the illustrated example, the communication line 12a connects station 1 and station 2, the communication line 12b connects station 2 and station 3, the communication line 12c connects station 3 and station 4, and the communication line 12d connects station 4 and station 1.

The same is applied to the communication line 13. Specifically, the communication line 13 is configured by illustrated communication lines 13a, 13b, 13c, and 13d. Each of the communication lines connects two arbitrary nodes 10. In the illustrated example, the communication line 13a connects station 1 and station 2, the communication line 13b connects station 2 and station 3, the communication line 13c connects station 3 and station 4, and the communication line 13d connects station 4 and station 1.

As an example, in communication between station 1 and station 2, station 1 transmits a data frame (a packet) to station 2 via the communication line 12a, and station 2 transmits a data frame (a packet) to station 1 via the communication line 13a. Therefore, even when station 1 and station 2 simultaneously transmit a packet to each other, collision of packets does not occur because station 1 and station 2 use different communication lines. This is similar in communication between other stations. In the entirety of the network system, even when all of the stations simultaneously transmit a packet, collision of packets does not occur because all of the stations use different communication lines to transmit a packet.

Each of the nodes 10 also includes a processing unit 14, a cycle timer 15, and a send timer 16 in addition to the driver 11 above. The cycle timer 15 and the send timer 16 are described in Patent Documents 1 and 2 listed above, and the description thereof is omitted. The processing unit 14 performs main processing of the node 10, and performs various processes such as the control of a not-illustrated machine to be controlled, the collection of data or the like indicating a state of the machine, the management of the setting and starting of the cycle timer 15 and the send timer 16, or the generation of a transmission data frame (a packet).

The driver 11 is a processing unit (a communication-dedicated processor or the like) that performs communication processing via the communication lines 12 and 13 for transmitting the transmission data frame to another node in response to a request from the processing unit 14, transferring a transmission data frame to the processing unit 14 upon receipt of the transmission data frame from another node, and performing other processes.

Upon receipt of a packet transmitted from an upstream side through any of the communication lines 12 and 13, the driver 11 transmits the packet to a downstream side when the driver 11 determines that the packet is to be relayed. Using station 1 as an example, station 4 is on an upstream side on line A, and station 2 is on a downstream side. On line B, station 4 is on the downstream side, and station 2 is on the upstream side.

Therefore, upon receipt of a transmission packet (a data frame) from station 4 via the communication line 12d, the driver 11 in station 1 transfers the transmission packet to station 2 via the communication line 12a when the driver 11 relays the transmission packet. In relaying the data frame, the driver 11 obtains the content (data) of the data frame, and transfers the data frame to the processing unit 14 as needed. Similarly, upon receipt of a packet from station 2 via the communication line 13a, the driver 11 in station 1 transmits the packet to station 4 via the communication line 13d when the driver 11 relays the packet. In a case in which station 1 transmits data of the local station, the driver 11 in station 1 transmits this data frame onto both line A and line B. Namely, the driver 11 transmits the data frame to station 2 via the communication line 12a, and also transmits the data frame to station 4 via the communication line 13d.

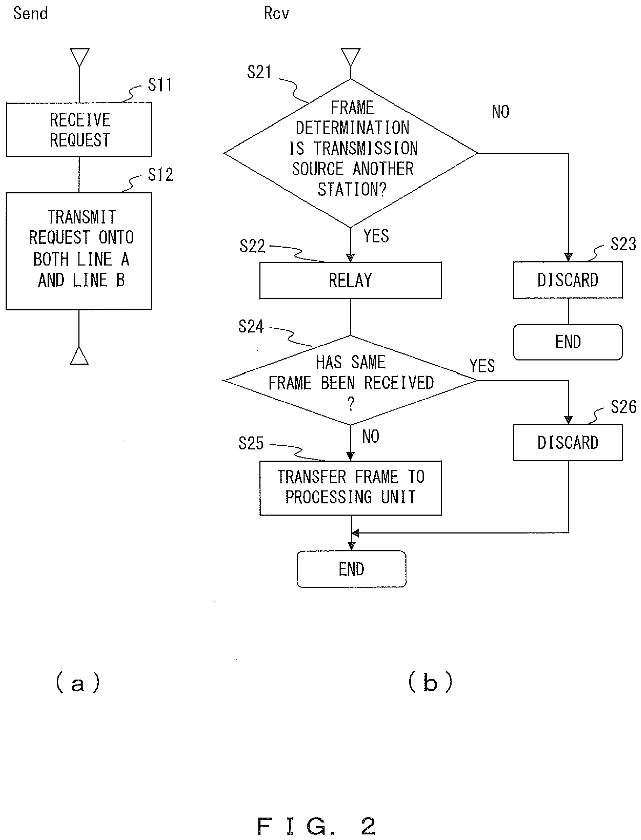

FIG. 2 (a) and FIG. 2(b) are flowcharts illustrating the processing performed by the node 10.

FIG. 2 (a) illustrates the processing of the driver 11 for transmitting data of the local station.

The processing unit 14 above (such as a CPU/MPU) included in the node 10 performs prescribed control processing or the like by executing prescribed software (a program) or the like. When an event of transmitting data of the local station occurs as one process of this processing, the processing unit 14 transmits the data and a transmission request to the driver 11.

Upon receipt of the data and the transmission request (step S11), the driver 11 transmits its data frame onto both line A and line B described above (step S12). The driver 11 transmits the data frame to downstream sides of both of the lines. Accordingly, in the case of station 1, station 1 transmits the data frame to station 2 via the communication line 12a on line A, and transmits the data frame to station 4 via the communication line 13d on line B.

The transmitted data (packet) of the local station normally circulates in the network, and returns to the local station. The driver 11may receive data (a packet) transmitted from another station.

FIG. 2 (b) illustrates the processing of the driver 11 for receiving data.

Upon receipt of an arbitrary packet via any of lines A and B described above, the driver 11 performs the processing of FIG. 2(b). The driver 11 checks a transmission source of the received packet, and when the transmission source is the local station (Step S21, NO), the driver 11 discards the packet (step S23). This is because the received packet is a packet that was transmitted by the local station in step S12 described above, circulated in the network, and returned to the local station, in this case.

When the transmission source of the received packet is another station (a station other than the local station) (step S21, YES), the driver 11 relays the received packet (step S22). Namely, the driver 11 transfers the received packet to an adjacent station on the downstream side. Of course, the driver 11 relays the received packet to a downstream side on line A when the driver 11 receives the packet via line A, and the driver 11 relays the received packet to a downstream side on line B when the driver 11 receives the packet via line B. When the received packet is relayed, the received packet is stored in a not-illustrated buffer or the like, and is used when the processes below of steps S24 and S25 are performed.

When the process of step S22 is performed, the driver 11 further determines whether the received packet is the same as a packet that has already been received (step S24). In this example, a transmission source node transmits a packet onto both line A and line B in step S12 described above, and therefore another station normally receives these two packets. Accordingly, a packet that is received second is not needed. Thus, when the driver 11 receives the same packet as a packet that has already been received (step S24, YES), the driver 11 discards the received packet (step S26).

As an example, the transmission source node gives the same frame number to two packets (data frames) to be transmitted in step S12 described above. Normally, the transmission source node transmits a data frame to which a frame number has been given every time the transmission source node transmits a data frame. The frame number is updated (for example, the frame number is incremented by +1) in every transmission. Consequently, in the process of step S24, it is determined that the received packet and a packet that has already been received are the same as each other, for example, when the received packet and the packet that has already been received have the same transmission source node and the same frame number. Note that this is an example, and the present invention is not limited to this example.

When the received packet is any one that was received first from among the above two packets (step S24, NO), the driver 11 transfers data of the received packet to the processing unit 14 (step S25). The processing unit 14 performs certain processing using the data, but this processing is not particularly related to the present invention, and the description thereof is omitted.

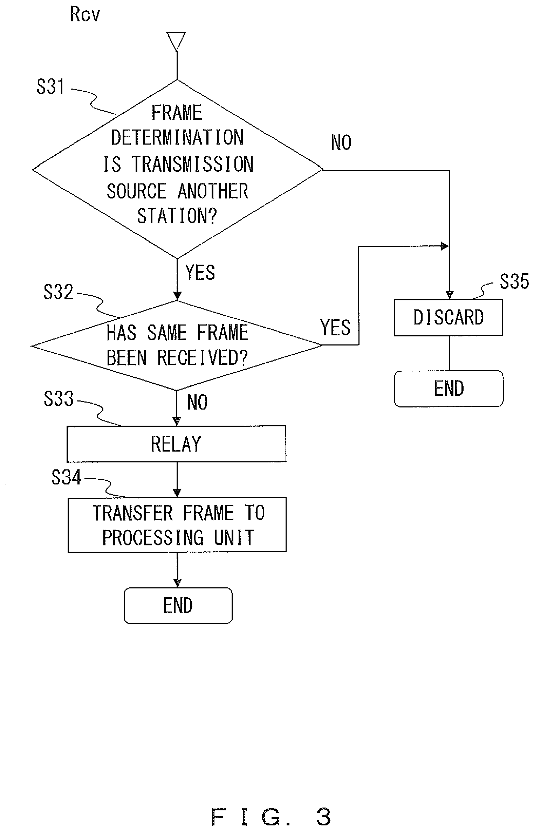

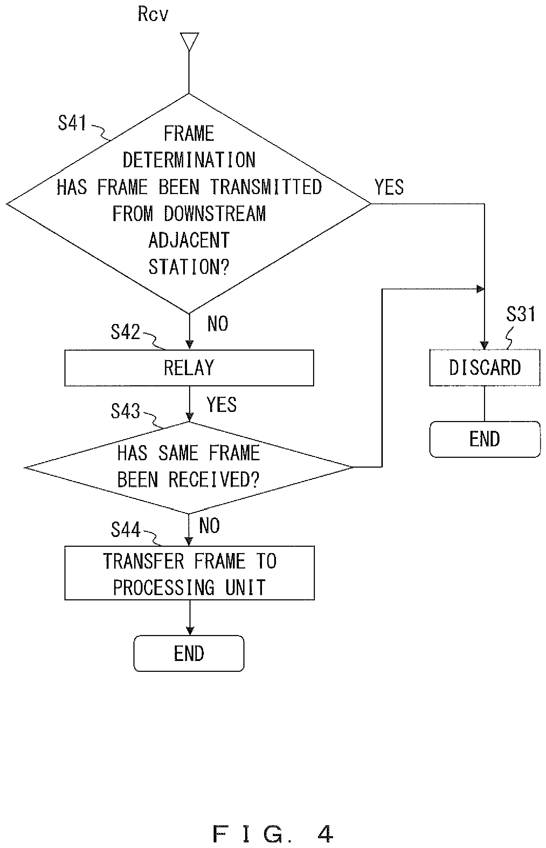

The processing of the driver 11 for receiving data is not limited to the example above of the processing illustrated in FIG. 2(b), and the processing may be, for example, the processing illustrated in FIG. 3 or FIG. 4.

FIG. 3 is a flowchart (no. 2) illustrating the processing of the driver 11 for receiving data.

FIG. 4 is a flowchart (no. 3) illustrating the processing of the driver 11 for receiving data.

First, the processing of FIG. 3 is described below.

Upon receipt of an arbitrary packet via any of lines A and B described above, the driver 11 performs the processing of FIG. 3. First, the driver 11 checks a transmission source of the received packet, and when the transmission source is the local station (step S31, NO), the driver 11 discards the packet (step S35) . The processes of steps S31 and S35 may be the same as the processes above of steps S21 and S23.

When the transmission source of the received packet is another station (step S31, YES), the driver 11 determines whether the received packet is the same as a packet that has already been received (step S32). This process may be the same as the process above of step S24, and the process is not particularly described here. When the driver 11 receives the same packet as the packet that has already been received (step S32, YES), the driver 11 discards the received packet (step S35) . The process of step S35 may be the same as the process above of step S26, and further, the process of step S26 may be the same as the process of step S23. Accordingly, a single "discard" process is illustrated in FIG. 3.

When the received packet is any one that was received first from among the two packets in the description above of the process of step S24 (step S32, NO), the driver 11 relays the received packet (an early-arrival packet) (step S33), and transmits data of the received packet to the processing unit 14 (step S34).

The processes of step S33 and S34 may be the same as the processes above of step S22 and S25.

The processing above of FIG. 3 is different from the processing of FIG. 2(b) in that a transmission source of a received packet is another station, and that, when the first packet is received, a process for relaying packet is performed.

Stated another way, in the processing of FIG. 3, even when a transmission source of a received packet is another station, when the same packet as a packet that has already been received is received, the received packet is not relayed. In contrast, in the processing of FIG. 2 (b), even in the above case, the received packet is relayed. In the processing of FIG. 3, the number of relays in the entirety of the system can be reduced in comparison with the processing of FIG. 2(b). In the processing of FIG. 3, as an example, it may be judged that, from among pieces of data that an arbitrary node 10 transmits onto both line A and line B, data that arrives at the local station first (an early-arrival packet) is relayed, and that data that arrives at the local station later (a late-arrival packet) is not relayed.

In a case in which station 3 performs the processing of FIG. 3 on packets transmitted by station 1 onto both of the lines, assume, for example, that a packet that passes through a route of station 1→ station 2 → station 3 arrives at station 3 first and that a packet that passes through a route of station 1 → station 4 → station 3 arrives at station 3 later. In this case, in the processing of FIG. 3, the packet that arrives later is not relayed to station 2. However, station 2 has already received a packet via the route of station 1 → station 2 → station 3, and therefore this causes no problems.

The processing of FIG. 4 is described next.

The processing of FIG. 4 is different from the processing of FIG. 2 in that the process of step S41 is performed instead of the process of step S21, and the other processes (step S42, S43, S44, and S45) may be the same as the processes of steps S22, S24, S25, and S23 (or S26) in FIG. 2, and the description thereof is not specifically given.

The process of step S41 is a process for checking a transmission source of a received packet and determining whether the transmission source is an adjacent station on a downstream side of the local station. When the transmission source is an adjacent station on a downstream side of the local station (step S41, YES), the driver 11 discards the received packet. Otherwise (step S41, NO), the processing moves on to step S42.

It goes without saying that an identification number (a station ID or the like) of a transmission source node is given to each packet (each data frame) . In addition, as an example, each of the nodes 10 has stored network configuration information. The network configuration information includes information, such as the station ID above, of adjacent stations on the upstream side and the downstream side of the local node for each of the nodes 10. The network configuration information is arbitrarily generated in advance, for example, by a developer, and is stored in each of the nodes 10, but the present invention is not limited to this example. As an example, a special packet is prepared in advance that is discarded by a transmission source node but is always relayed by nodes other than the transmission source node, and that is given the station IDs above or the like of relay stations when being relayed. When an arbitrary node 10 transmits the special packet at a certain time (for example, to an idle band), and the special packet circulates and returns to a transmission source node, the transmission source node can identify adjacent stations on the upstream side and the downstream side on the basis of the given station IDs.

In case of the processing of FIG. 2(b) or FIG. 3, when a frame transmitted by the local station in step S12 circulates in a ring-type network and returns to the local station, the frame is discarded. However, the present invention is not limited to this example, and the frame may be discarded by another station just before the local station, and FIG. 4 illustrates the processing in such an example.

The present invention is not limited to the example of FIG. 4, and as an example, in the processing of FIG. 3, the process of step S41 may be performed instead of the process of step S31.

The processing above of FIG. 2, FIG. 3, and FIG. 4 is summarized as the following, for example.

- When a packet circulates among each of the nodes 10 in a ring-type network, namely, when all of the nodes 10 that need to exchange data receive the packet, the packet is discarded. A node 10 that is a packet transmission source may discard the packet, or a node 10 just before a transmission source node (a node 10 that relays the packet to the transmission source node) may discard the packet.
- The transmission source node transmits the packet onto both line A and line B. The respective other nodes 10 receive the packet via both of the lines. The driver 11 of each of the other nodes 10 transfers a packet that is received first to the processing unit 14 (the node 10 substantially receives the packet), but the driver 11 does not transfer a packet that is received second to the processing unit 14 (the node 10 substantially does not receive that packet).
- Each of the other nodes may relay the packet that is received second, or may not relay the packet.

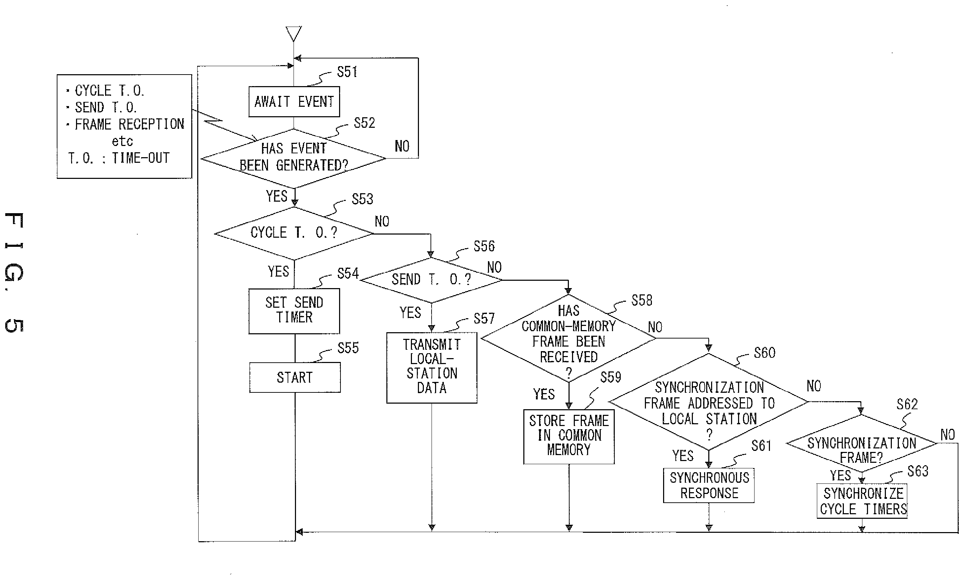

FIG. 5 is a flowchart illustrating the processing of the processing unit 14 in the node 10.

The processing of FIG. 5 is performed at any time. Basically, a certain event is awaited (step S51), and every time the certain event is generated (step S52, YES), a process according to the content of the generated event is performed.

When the generated event is a time-out of the cycle timer 15 (a cycle T. O.) (step S53, YES), a prescribed setting value is set in the send timer 16 (step S54), and the send timer 16 is started (step S55).

When the generated event is a time-out of the send timer 16 (a send T. O.) (step S56, YES), data of the local station is transmitted (step S57). This is an operation to transmit the data of the local station and a transmission request to the driver 11. Consequently, as described above, the driver 11 receives the data and the transmission request in step S11 described above, and the driver 11 transmits the data onto both line A and line B described above (step S12).

Basically, when time-up occurs in the send timer 16 that has been started in step 55 described above, the determination result in step S56 above becomes YES.

When the generated event is reception of a common-memory frame (step S58, YES), data of the common-memory frame is stored in a corresponding area of a not-illustrated common memory (step S59). Here, assume that a frame transmitted according to the process above of step S57 is referred to as a common-memory frame. As a result of the processing above of FIG. 2 (b), when the driver 11 receives the common-memory frame transmitted by another arbitrary station in the process above of step S57, and the driver 11 transfers the common-memory frame to the processing unit 14 in step S25 described above, the determination result of step S58 above becomes YES.

When the received frame is not a common-memory frame, but is, for example, a synchronization frame, the processing described below is performed.

Namely, there is a case in which a master node transmits a synchronization frame for synchronizing the cycle timer 15 at a different timing, in addition to the case of transmitting the common-memory frame. The synchronization frame is transmitted to an arbitrary destination node. Upon receipt of the synchronization frame, each of the nodes 10 other than the destination node relays the synchronization frame. Upon receipt to the synchronization frame, the destination node does not relay the synchronization frame, and returns a synchronous response frame to a transmission source node (the master node) . This process is the processes of steps S60 and S61 illustrated in FIG. 5.

Stated another way, when the generated event is reception of a synchronization frame addressed to the local node (step S60, YES), the synchronous response frame is transmitted to the driver 11, and the synchronous response frame is transmitted to the transmission source node (the master node) by the driver 11 (step S61).

Any one station of a plurality of nodes 10 that configure a system (in an example, any of station 1, station 2, station 3, and station 4) has been set to operate as the master node in advance. Alternatively, priority is determined in ascending order or descending order of a station number, a MAC address, or the like, and any one station of the plurality of nodes 10 operates as the master node based on the priority. All of the nodes 10 other than the master node basically operate as slave nodes. The master node synchronizes the cycle timers 15 of all of the slave nodes with the cycle timer 15 of the local node by using the synchronization frame or the like. This is described in conventional technology documents and the like, and is not described in more detail here.

As an example, the master node transmits the synchronization frame onto both line A and line B in the process of step S12 in FIG. 2(a), for example. By doing this, when a destination slave node receives a synchronization frame that arrives early, the driver 11 transfers the synchronization frame to the processing unit 14 in the process of step S34, the determination result in step S60 above becomes YES, and the processing unit 14 performs the process of step S61, for example, in the processing of FIG. 3 and FIG. 5. Consequently, the driver 11 transmits the synchronous response frame onto both of the lines in the process above of step S12. The driver 11 of the master node transfers the synchronous response frame that has arrived early to the processing unit 14 in the process of step S34. Both the master node and the destination slave node discard a frame that arrives late and a transmission frame of the local station (step S35).

As a result of the processing above, a frame reciprocates between a master node and a destination slave node through the shortest route.

The time required for the frame to reciprocate through the shortest route is measured by the master node, and half of the measured time is calculated as a communication time (a communication delay time) between the master node and the destination slave node. Processing for synchronizing the cycle timers 15 by using the communication delay time is a conventional technology, and is not particularly described here.

When the generated event is not any of the various events above (step S60, NO), a process according to the generated event is performed, but this process is not particularly illustrated or described.

As described with reference to FIG. 14, in a conventional technology, setting values of the send timers in all of the stations are set to values different from each other. In contrast, in the present method, as an example, assume that the same setting value of the send timer is set in all of the stations (the setting values do not always need to be completely the same as each other, and the setting values may be almost the same as each other. Namely, the setting values may be slightly different from each other).

In other words, in a conventional technology, a setting value of the send-timer in step S54 is determined for each of the nodes, as an example, according to the following calculation expression.

$$\text{Setting value} = \text{TC band time} + (\text{slot unit time} \times \text{allocated slot number of local station})$$

The slot unit time is the length of the transmission time slot (105, 108, or the like), and as an example, slot unit time = TS band time / number of stations is established. The allocated slot number is "'0' + a natural number", and when number of stations = N is established, any of 0, 1, 2, ..., N-1 is allocated to each of the stations so as not to overlap each other.

In contrast, in the present method, as an example, the same setting value of the send timer is set in all of the nodes in advance. This example is expressed below.

$$\text{Setting value} = \text{TC band time} + \alpha \ (\alpha: 0 \text{ or an arbitrary positive value})$$

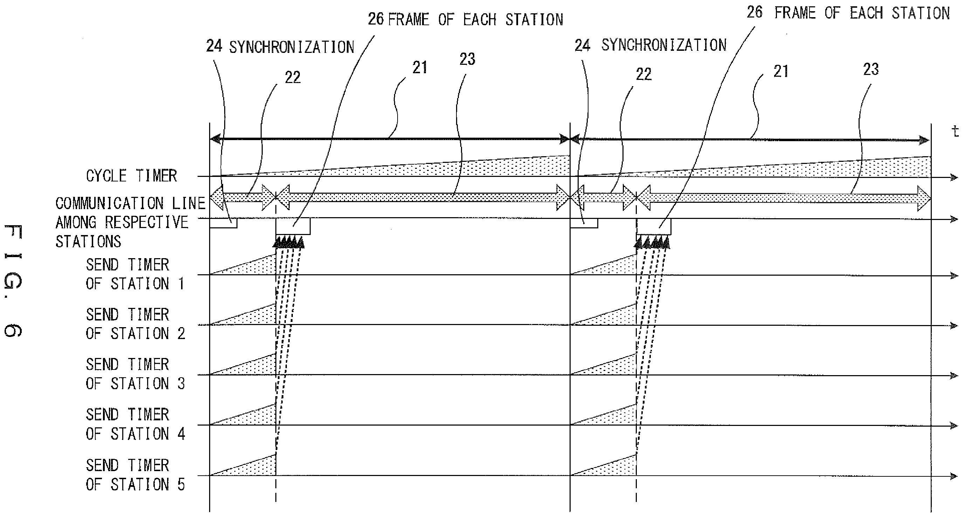

FIG. 6 illustrates an operation relating to the transmission of local data in a network system in the present method.

As illustrated, the processes above of steps S54 and S55 are performed in each of the nodes 10 in every scanning time 21 (every data exchange cycle) generated by the cycle timer 15, and the send timer 16 starts to operate. As described above, an arbitrary same value is set in send timers 16 of all of the nodes 10, and therefore time-up occurs at the same timing in all of the send timers 16, as illustrated in FIG. 6. Consequently, the process above of step S57 (the transmission of a local-station data frame 26) is simultaneously performed in all of the nodes 10.

This is an example, and the present invention is not limited to this example. Basically, any method can be employed if the process above of step S57 (the transmission of the local-station data frame 26) is simultaneously performed in all of the nodes 10. "Simultaneously" in this case is not limited to "completely simultaneously", and the processes may be performed at timings slightly different from each other.

In order to simultaneously transmit the local-station data, a configuration is employed, for example, in which time-up occurs at the same timing in all of the send timers 16, as described above, and as an example to implement this, the cycle timers 15 are synchronized with each other, and the same value is set in the send timers 16 of all of the nodes 10. However, the present invention is not limited to this example.

As an example, it is sufficient that a time period (such as the number of counts) from the send timer 16 startup to time-up is the same, and an example of a method that implements this is to set the same setting value in the send timer 16 as described above. However, the present invention is not limited to this. As an example, when initial values of the respective send timers 16 (values at the time when the send timers 16 are started) are different from each other, of course, setting values are also different from each other. As an example, in a case in which the above number of counts is '1000', assume, for example, that an initial value of the send timer 16 in station 1 is '0', that an initial value of the send timer 16 in station 2 is '1000', that an initial value of the send timer 16 in station 3 is '2000', and that an initial value of the send timer 16 in station 4 is '3000'. In this case, when it is assumed that setting values that are set in step S54 above in respective send timers of station 1, station 2, station 3, and station 4 are '1000', '2000', '3000', and '4000', respectively, the number of counts until time-up occurs in the send timers 16 in all of the nodes 10 is '1000'. Consequently, time-up occurs at the same timing in all of the send timers 16.

As described above, in the present method, as an example, it is sufficient that all of the send timers 16 are configured such that time-up occurs at the same timing, and any method that implements this may be employed. As an example, any method may be employed if the send timers 16 of all of the nodes 10 are started at the same timing and time-up occurs in the send timers 16 after the same time period has passed such that time-up occurs at the same timing in all of the send timers 16. In addition, the method is not limited to this example.

Further, in the present method, not all of the send timers 16 may be configured in such a way that time-up occurs at the same timing, and any configuration may be employed in which timings of transmitting local-station data are eventually the same as each other in all of the nodes 10.

The "same timing" above is not limited to completely the same timing, and timings may be slightly different from each other.

In the illustrated example, assume that five nodes 10 exist, and a first send timer to a fifth send timer that are illustrated refer to respective send timers 16 of the five nodes 10.

In order to transmit data at the same timing, cycle timers in all of the nodes are assumed to be synchronized with each other. This is implemented in the conventional technology described in Patent Document 1, Patent Document 2, or the like, and this is not particularly described in detail, but is simply described below.

First, in order to synchronize the cycle timers with each other, in the conventional technology, a transmission delay time between a master node and each of the slave nodes is obtained. The time required for a specific packet to reciprocate between the master node and each of the slave nodes is measured, and half of the measured value is used as the transmission delay time. Upon receipt of the specific packet, each of the slave nodes immediately returns the specific packet to the master node. Also in the present method, a process that is basically similar to the method above is performed such that the transmission delay time is obtained. Namely, in the case of a specific packet, the specific packet is not made to circulate in a ring-type network, and the specific packet is relayed to a destination slave node by sequentially using respective slave nodes. Upon receipt of the specific packet, the destination slave node immediately returns the specific packet to the master node.

In the case of this example, the master node transmits the specific packet onto both line A and line B, and the destination slave node receives two specific packets through two communication routes. The destination slave node performs the return process above only on a specific packet that is received first, and discards a specific packet that is received second. Namely, a transmission delay time through the shortest route among the master node and the respective slave nodes is obtained.

In the description above, the master node and the slave nodes are not particularly distinguished, but assume, for example, that station 1 in FIG. 1 is the master node. When station 1 transmits a specific packet addressed to station 2, for example, onto both line A and line B, station 2 first receives the specific packet via the communication line 12a, and immediately returns the specific packet to station 1 via the communication line 13a. Then, station 2 receives a specific packet that has been relayed on line B by station 4 and station 3, via-the communication line 13b, but station 2 discards the specific packet.

By doing this, a transmission delay time between the master node (station 1) and station 2, namely, the time required for communication between station 1 and station 2 through the shortest route, is obtained. A transmission delay time between station 1 and station 3 and a transmission delay time between station 1 and station 4 are obtained similarly.

As illustrated in FIG. 6, the scanning time 21, which is a data exchange cycle, is configured by a TC band 22 used to adjust time and a TS band 23 used to exchange data. In the TC band 22, a synchronization frame 24 for time synchronization using, for example, the node synchronization method described in Patent Document 2 is transmitted onto a transmission line by the master node. Each of the slave nodes synchronizes a cycle timer 15 of the local station with a cycle timer 15 of the master node on the basis of a timing of receiving the synchronization frame 24 and the transmission delay time. This process is the processes of steps S62 and S63 illustrated in FIG. 5. Namely, when a generated event is the reception of a synchronization frame (step S62, YES), the cycle timers are synchronized with each other (step S63).

The synchronization frame is an example of the specific packet, but the synchronization frame is different from the synchronization frame 24.

FIG. 6 illustrates one operation of the cycle timer 15, but each of the nodes 10 operates according to the cycle timer 15 of the local station (its own station). As described above, all of the cycle timers 15 are assumed to be synchronized with each other, and therefore only one operation is illustrated.

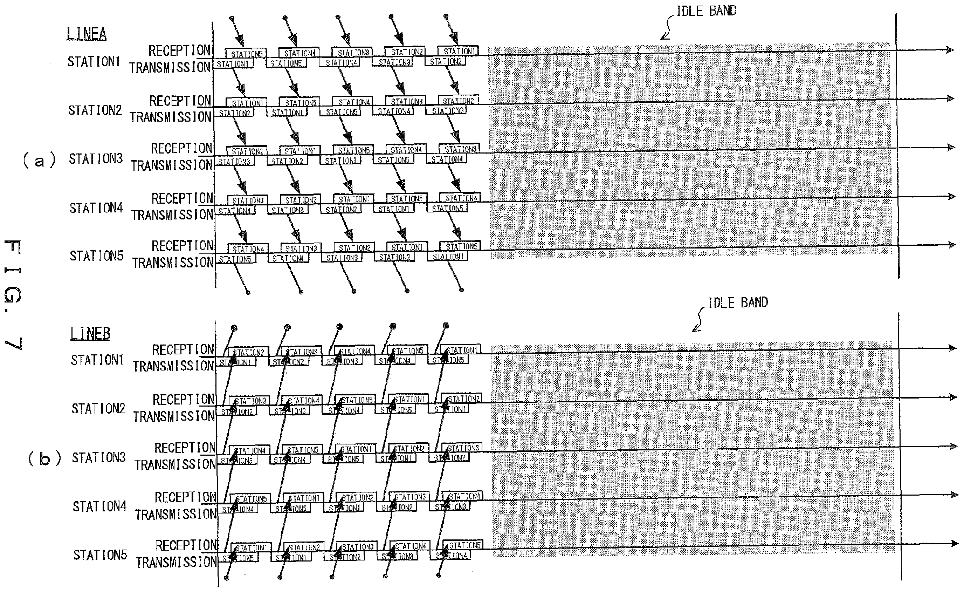

FIG. 7 illustrates a data transmission/reception operation in the entirety of a system in the present method.

FIG. 7 illustrates an operation in a configuration in which station 5 is further provided between station 1 and station 4 in FIG. 1 such that the system is configured by five nodes 10 in total.

In FIG. 7, similar to FIG. 16, the illustrated rectangle indicates transmission/reception data (a packet), and in each station, an upper side indicates reception and a lower side indicates transmission. A horizontal axis indicates time. A transmission source station is illustrated in a rectangle. In addition, FIG. 7 illustrates an operation after a point in time at which time-up occurs in the send timer 16. As illustrated at an upper-left end of this figure, the respective stations simultaneously transmit data of the local data. As an example, station 1 transmits the illustrated data of a rectangle in which "station 1" is indicated.

In the TS band, data is mutually exchanged among all of the nodes 10. Each of the nodes 10 transmits the same frame (local-station data) onto line A and line B at the transmission timing above illustrated in FIG. 6. When each of the nodes 10 receives a frame transmitted from an adjacent node (an adjacent station) on an upstream side, each of the nodes 10 relays the received frame to an adjacent node on a downstream side unless a transmission source is the local station.

As described above, data is transmitted onto both line A and line B, and therefore FIG. 7 illustrates respective operations to transmit or receive data on line A and line B. However, only an operation on line A is described here for simplification of description, and it may be judged that an operation on line B is similar to the operation on line A.

Here, assume that a packet circulates in the order of station 1 → station 2 → station 3 → station 4 → station 5 → station 1 on line A, by using station 1 as a reference.

Namely, on line A, an adjacent station on a downstream side of station 1 is station 2, and an adjacent station on an upstream side is station 5. Therefore, in an operation relating to line A in FIG. 7, transmission data of station 1 (a rectangle in which "station 1" is indicated) is received by station 2. In addition, station 1 starts to receive the data "station 5" while transmitting the data "station 1", as illustrated. The data "station 1" and the data "station 5" are transmitted at the same timing, but a reception timing is somewhat delayed due to a delay on a communication route, or the like.

Another station performs an operation similar to the operation above of station 1, and as an example, station 3 transmits local-station data to station 4, and starts to receive the data "station 2" while transmitting the data, as illustrated.

As an example, when station 1 completes reception of the above data "station 5", station 1 immediately transfers the data "station 5" to station 2. Namely, station 1 relays the data "station 5". Until station 1 completes reception of reception data, station 1 cannot transfer the reception data. Station 1 starts to receive the data "station 4" transferred from station 5, as illustrated, in the middle of a process for transferring the data "station 5". When reception is completed, station 1 immediately starts to transfer the data "station 4".

Then, station 1 sequentially relays (receives and transfers) the data "station 3" and the data "station 2", as illustrated, and further receives the data "station 1", as illustrated. Namely, the local-station data circulates through line A, and returns. In this case, in station 1, the determination result in step S21 above is NO, and station 1 performs the process above of step S23 (discards the received data "station 1").

Another station performs an operation almost similar to the operation above of station 1, and the other station finally receives transmission data of the local station, and discards the received data. Of course, this is an operation in the case of the example illustrated in FIG. 2(b), and the present invention is not limited to this, as described above.

As described above, as illustrated in FIG. 7, all of the nodes 10 perform transmission/reception processes with almost no idle time, and it is obvious that data exchange among all of the nodes is completed in a shorter time than in the conventional method above illustrated in FIG. 16. Accordingly, in comparison with the conventional method, an amount of data may be increased, or a setting value of the cycle timer 15 may be reduced and a scanning time may be reduced.

A communication band between nodes does not enter into an unused state, as in the conventional technology. Therefore, the time required to mutually exchange data among all of the nodes is reduced, and data can be further exchanged during a remaining band time, and an amount of data on a network can be increased. In addition, by using the remaining band time as the next scanning time, the speed of a data exchange cycle can be increased.

The operation on line A has been described above. Similarly, a packet circulates in a ring-type network on line B. Normally, each of the nodes 10 receives the same packet through both line A and line B, as described above. The process above of step S26 is performed such that a packet received late is discarded.

As an example, station 1 receives the data "station 5" through a route of station 5 → station 1 on line A, namely, at an early stage. On line B, station 1 receives the data "station 5" through a route of station 5 → station 4 → station 3 → station 2 → station 1, namely, at the final stage. Stated another way, station 1 receives the data "station 5" through line A the first time, and receives the data "station 5" through line B the second time. Station 1 performs the process of step S25 the first time, and performs the process of step S26 the second time. However, this is an example, and the present invention is not limited to this example. As an example, station 1 may perform the process of step S26 the first time, and may perform the process of step S25 the second time. As described above, when two identical frames are received, one is discarded and the other is received on a first-come priority basis or on a late-arrival priority basis.

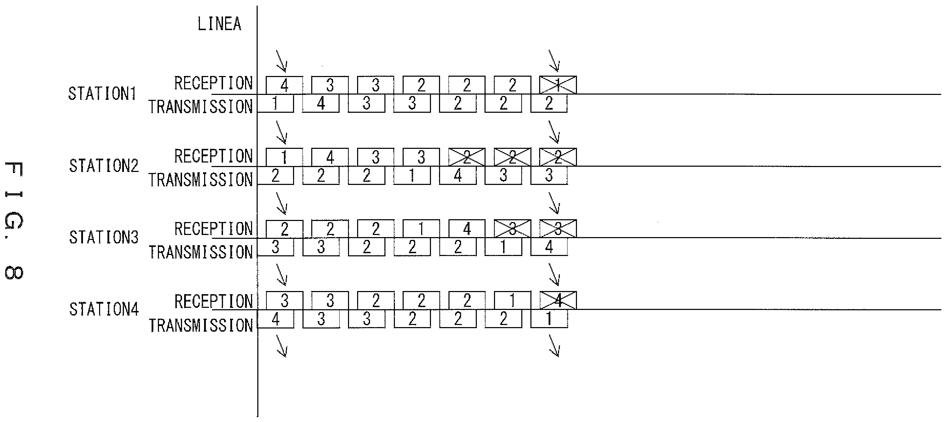

The example illustrated in FIG. 7 indicates a case in which amounts of transmission data in all of the nodes 10 are the same as each other, but in the present method, the effects above can be achieved even when the amounts of transmission data in all of the nodes 10 are different from each other. This case is described using the specific example of FIG. 8.

Here, assume that an amount of data that can be transmitted in one packet has an upper limit, and that when an amount of transmission data is large, the transmission data is divided into a plurality of packets and the plurality of packets are transmitted. In the example illustrated in FIG. 8, assume that each of station 1 and station 4 transmits only one packet, that station 2 transmits three packets, and that station 3 transmits two packets. Namely, station 2 has the largest amount of transmission data, and station 4 has the second largest amount of transmission data.

In addition, assume that, unlike FIG. 7, FIG. 8 illustrates an operation in the configuration illustrated in FIG. 1. Therefore, four nodes 10 (station 1, station 2, station 3, and station 4) are illustrated. In FIG. 8, only an operation relating to line A is illustrated, and an operation relating to line B is omitted. On line A, a packet circulates, for example, in the order of station 1 → station 2 → station 3 → station 4 → station 1.

In FIG. 8, when time-up occurs in the send timer 16 of the local station, for example, at the beginning of the TS band, each of the four stations (station 1, station 2, station 3, and station 4) starts to transmit data of the local station. Using station 1 as an example, station 1 starts to transmit data of the local station (the data "station 1"), and starts to receive the data "station 4" during this transmission operation. When station 1 completes transmission of the data "station 1", and thereafter completes reception of the data "station 4", station 1 immediately starts to transfer the data "station 4" to station 2. Then, station 1 sequentially receives two pieces of the data "station 3", and sequentially relays the two pieces to station 2. Thereafter station 1 sequentially receives three pieces of the data "station 2", and sequentially relays the three pieces to station 2. Upon receipt of the data "station 1", station 1 discards this data, as described above (in the case of the example of FIG. 2(b)).

The operation illustrated in FIG. 8 of station 2 is described next.

As a result of the above, station 2 transmits three pieces of local-station data (the data "station 2"). Here, as an example, in a case in which the driver 11 is configured to include a FIFO memory and a transmission-dedicated chip (such as an IC) described later, the driver 11 stores the three pieces of the data "station 2" in the FIFO memory. The transmission-dedicated chip sequentially captures and transmits data stored in the FIFO memory. The transmission-dedicated chip first captures the first piece of the three pieces of the data "station 2", and starts to transmit the first piece of the data "station 2". In the illustrated example, the data "station 1" starts to be received in the middle of a process for transmitting the first piece of the data "station 2", and when reception of the data "station 1" is completed, the data "station 1" is stored in the FIFO memory. Further, thereafter the data "station 4" starts to be received, and when reception of the data "station 4" is completed, the data "station 4" is stored in the FIFO memory.

The transmission-dedicated chip sequentially captures and transmits data stored in the FIFO memory in order of earliness of storage. Therefore, in the example above, as illustrated, first, the transmission-dedicated chip sequentially transmits the three pieces of the data "station 2", thereafter transmits the data "station 1", and transmits the data "station 4". The transmission of the data "station 1" and the data "station 4" is a relay (transfer) process. A transmission destination is station 3, which is an adjacent station on a downstream side.

Further, station 2 sequentially receives two pieces of the data "station 3", and relays the two pieces of the data "station 3" after a relay of data of another station that has been received is completed. Further, station 2 sequentially receives three pieces of local-station data (the data "station 2"), but discards all of the three pieces of the local-station data in step S23 above.

In the example above, when local-station data is received, the local-station data is discarded, but the present invention is not limited to this example. As an example, when a packet for which a transmission source is an adjacent station on a downstream side of the local station is received, data of this packet may be obtained but the packet may not be relayed (for example, the packet may be discarded). It goes without saying that the transmission source does not need to obtain the data of this packet, and the transmission source only discards the packet as in step S23 above. Therefore, a process for relaying this packet is not requested, and the processing above may be performed in order to eliminate this unrequested process. As a result, data exchange among all of the nodes can be completed in a further shorter time.

The operations in station 3 and station 4 are substantially similar to the operations above in station 1 and station 2, and the description thereof is omitted.

The operation of FIG. 8 is further described below by using the configuration illustrated in FIG. 1(b).

First, assume that the driver 11 illustrated in FIG. 1(b) includes a FIFO memory and a transmission-dedicated chip that are not illustrated. The FIFO memory and the transmission-dedicated chip (such as an IC) are provided for each of line A and line B. As an example, in a case in which a FIFO memory for line A stores one or more arbitrary data frames, a transmission-dedicated chip for line A sequentially transmits the one or more arbitrary data frames onto line A. In the case of station 2, for example, station 2 transmits the data frames onto the communication line 12b (namely, to station 3).

Meanwhile, the driver 11 itself performs a process for storing a local-station data frame or the received data frame in a corresponding FIFO memory in the process above of step S12 or step S22. Using the example of station 2 described above with reference to FIG. 8, station 2 first transmits local-station data configured by three data frames onto both line A and line B in the process of step S12. Only an operation relating to line A is described here. The three data frames "station 2" are sequentially stored in a FIFO memory that corresponds to line A.

Consequently, a transmission-dedicated chip that corresponds to line A sequentially transmits the three data frames "station 2" onto the communication line 12b. As a result, as described above with reference to FIG. 8, station 2 sequentially transmits three pieces of local-station data (the data "station 2") to station 3. As described above with reference to FIG. 8, during this process, station 2 sequentially receives the data "station 1", the data "station 4", and the like, and station 2 sequentially stores these pieces of data in the FIFO memory that corresponds to line A in the relay process of step S22. By doing this, when station 2 completes transmission of the three data fames "station 2", station 2 sequentially transmits the data "station 1", the data "station 4", and the like, as described above with reference to FIG. 8.

The present invention is not limited to the example above, and information (a pointer or the like) indicating a place in which each piece of data is stored may be stored in the FIFO memory. The transmission-dedicated chip sequentially captures the pointer or the like from the FIFO memory, and transmits data in a storage area that is indicated by the captured pointer or the like. In this case, as an example, in the relay process, received data is stored in a prescribed storage area for reception (a reception buffer or the like), and when reception is completed (when storage of the received data is completed), a pointer or the like that indicates the prescribed storage area (the reception buffer or the like) is stored in the FIFO memory.

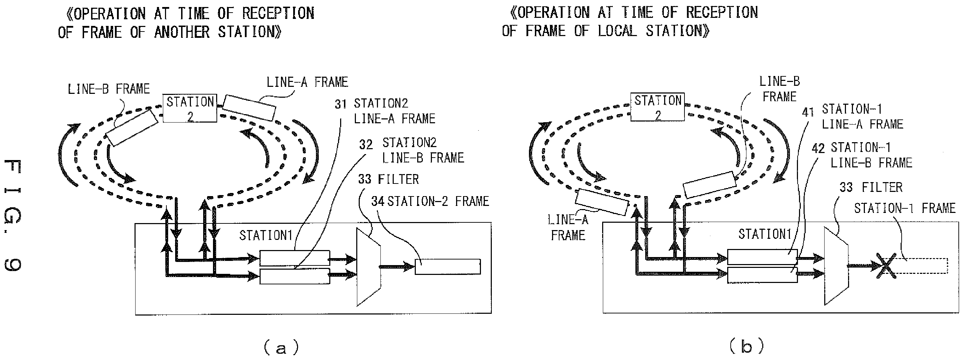

An image of the processes above of steps S21 and S23 is illustrated in FIG. 9(b), and an image of the processes above of steps S24 and S26 is illustrated in FIG. 9(a).

The description below is made under the assumption that each of the nodes 10 has a function of a illustrated filter 33. Assume that the processes above of steps S21 and S23 and the processes above of steps S24 and S26 are implemented by the filter 33. Only station 1 and station 2 are illustrated and described here, but other stations may exist (it may be considered that the other stations are omitted). An example of an operation of station 1 to receive a packet is described.

First, as illustrated in FIG. 9(a), when station 2 transmits local-station data, the local-station data is transmitted station 1 through line A and line B. Two packets received by station 1 through both of the lines are a station-2 line-A frame 31 and a station-2 line-B frame 32 that are illustrated. The filter 33 captures any one of these two data frames 31 and 32 as an illustrated station-2 frame 34 into the local station on the first-come priority basis or the late-arrival priority basis.

In FIG. 9(b), assume that packets of local-station data that are transmitted by station 1 onto both line A and line B, that are relayed by other stations such as station 2, and that finally return to station 1 are a staion-1 line-A frame 41 and a station-1 line-B frame 42 that are illustrated. In this case, both of these two data frames 41 and 42 are discarded by the filter 33 in step S23 above.

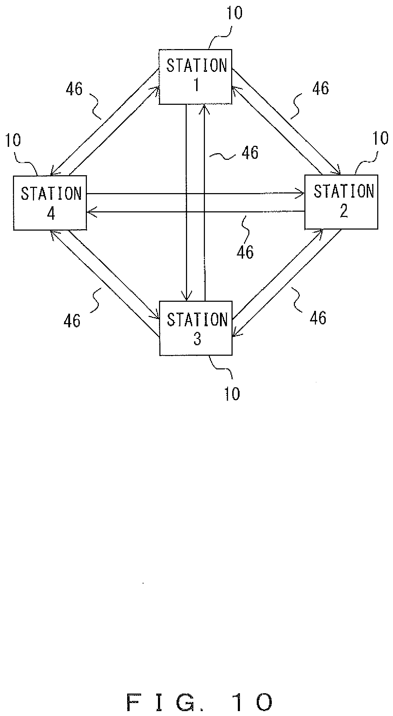

A network topology to which the present method is applied is not limited to the ring-type topology or the line-type topology described above. As an example, the network topology illustrated in FIG. 10 may be employed. In FIG. 10, respective communication lines 46 that each connect two arbitrary nodes 10 may be judged to correspond to the communication lines 12a, 12b, 12c, and 12d or the communication lines 13a, 13b, 13c, and 13d. The control network system in this example is not limited to Ethernet.

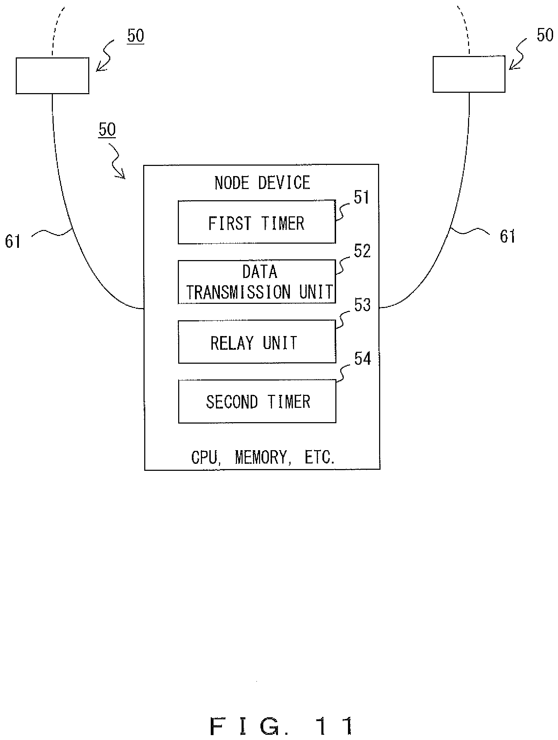

FIG. 11 is a functional block diagram of the control network system in this example.

The control network system of FIG. 11 is configured by a plurality of node devices 50, and the control network system is schematically, for example, a network system in which communication interference does not occur even when the plurality of node devices 50 simultaneously transmit data.

More specifically, a network to which the present method is applied is configured, for example, by a plurality of communication lines 61, and the network is a network in which each of the communication lines connects two arbitrary node devices 50 so as to have a peer-to-peer relationship. Further, the network is a full-duplex line. Namely, the network is configured by an upstream communication line and a downstream communication line. The network has a network configuration in which collision of packets does not occur even when each of the node devices 50 simultaneously transmits data. Further, the network is also a network in which communication between node devices 50 that are not directly connected to each other via the communication line 61 is implemented by relaying using other node devices 50.

In the example illustrated in FIG. 11, each of the node devices 50 includes a first timer 51, a data transmission unit 52, and a relay unit 53. Each of the node devices 50 may further include a second timer 54. It may be judged that an example of the first timer 51 is the send timer 16 above, and that an example of the second timer 54 is the cycle timer 15 above.

The data transmission unit 52 transmits data of the local station to an adjacent station at a prescribed timing generated by the first timer 51 in every prescribed data exchange cycle (within a scanning time). A transmission destination is an adjacent station on a downstream side.

When the relay unit 53 receives transmission data from an arbitrary (upstream) adjacent station, the relay unit 53 obtains the transmission data, and also relays the transmission data to another adjacent station.

Prescribed timings generated by the first timers 51 in all of the node devices 50 are made to be the same timing. The "same timing" is not limited to "completely the same timing", and the prescribed timings may be slightly different from each other. Namely, it is assumed that the "same" includes "almost the same".

As an example, the prescribed timings generated by the first timers 51 of all of the node devices 50 are made to be the same timing by setting the same setting value in the first timers 51 of all of the node devices 51, but the present invention is not limited to this example. As an assumption, for example, the second timers 54 of all of the node devices 50 need to be synchronized with each other, but the present invention is not limited to this example. A method for synchronization is a conventional technology, as described above. A data exchange cycle is generated by the second timer 54.

As another example, data that each of the node devices 50 transmits by using the data transmission unit 52 is relayed by the relay units 53 of the other node devices 50, the data is received/obtained by all of the other node devices 50 within the data exchange cycle, and mutual data exchange among all of the node devices is completed. "Received/obtained" means "received and obtained", but the present invention is not limited to this example.

As yet another example, the control network system illustrated in the example of FIG. 11 is configured by the plurality of node devices 50 and the plurality of communication lines 61 described above, and each of the communication lines 61 connects two arbitrary node devices 50. Each of the node devices 50 can perform communication with the adjacent station that is another node device 50 connected to the local device via a communication line. Communication between node devices that are not connected via a communication line is implemented by one or more other node devices 50 performing a relay by using the relay units 53.

The communication line 61 is, for example, a full-duplex line.

As an example, the control network system of FIG. 11 is a ring-type network or a line-type network, but the control network system is not limited to this example.

Alternatively, as an example, the control network system of FIG. 11 is a network in which the respective node devices are connected by using the full-duplex communication line so as to have a ring-type topology or a line-type topology. As an example, the data transmission unit 52 transmits data of the local device onto both lines of the full-duplex communication line.

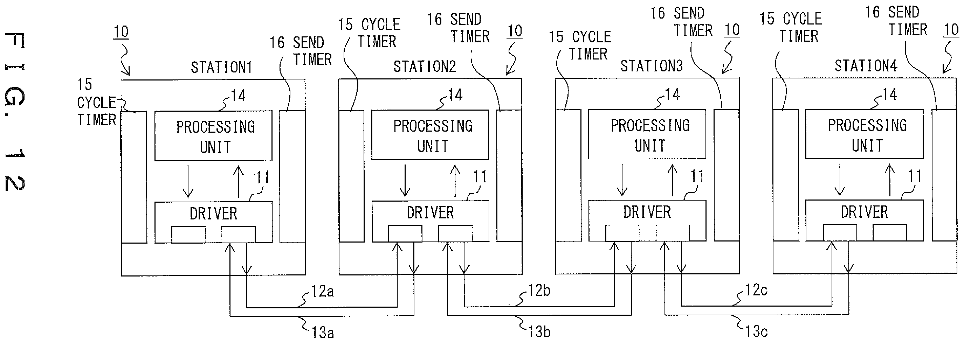

An example of a ring-type full-duplex line is illustrated in FIG. 1. An example of a line-type full-duplex line is illustrated in FIG. 12. The configuration of FIG. 12 may be judged to be a configuration in which the communication line 12d and the communication line 13d in FIG. 1(b) are omitted. In the case of such a line-type configuration, transmission data of each of the nodes 10 does not return to the local station, and relaying is finished at a point in time at which the transmission data reaches nodes 10 at both ends (in this example, station 1 and station 4).

As an example, the relay unit 53 does not relay received data, and discards the received data, when a transmission source of the received data is the local device.

As another example, the relay unit 53 does not relay received data, and discards the received data, when a transmission source of the received data is an adjacent station on a downstream side.

As an example, within the data exchange cycle, transmission data of each of the node devices 50 is repeatedly relayed, and is received by all other node devices 50, and therefore data exchange among all of the node devices is completed.

In addition, each of the node devices 50 includes an arithmetic processor such as a CPU/MPU, and a storage such as a memory. In the storage, a prescribed application program is stored in advance. Processing functions of the data transmission unit 52 and the relay unit 53 are implemented by the arithmetic processor executing the application program. Alternatively, it can also be said that the processing of the flowcharts illustrated in FIG. 2(a) and FIG. 2(b), FIG. 3, FIG. 4, and FIG. 5 is implemented by the arithmetic processor executing the application program.

As described above, in the present method, all of the nodes 10 that configure a network simultaneously transmit location-station data to nodes adjacent to the local node, by using a timer that is synchronized with a timer of a master node according to a node synchronization method described in Patent Document 2, for example. After completing transmission of the local-station data, each of the nodes 10 relays frame data received from one of the nodes adjacent to the local node to the other adjacent node. As described above, a transmission efficiency is improved by simultaneously using a transmission band of a full-duplex line between configuration nodes, and an increase in a transmission amount in the entirety of a network and an increase in the speed of a data exchange cycle can be achieved. Consequently, as an example, in a network system of a full-duplex line having a ring-type topology or a line-type topology, an amount of data on a network can be increased, and an increase in the speed of the data exchange cycle can be achieved.

A target is a control network system, and data exchange among all of the nodes needs to be completed in every prescribed data exchange cycle (within a scanning time), as described above. Accordingly, it is assumed that each of the nodes that configure the system needs to perform mutual data exchange in a state in which a property of being in real time is assured.

The present method is not limited to the examples above. As an example, a target to which the present method is applied is not limited to the "network system of a full-duplex line having a ring-type topology or a line-type topology". The topology is not always of a ring type or a line type, as described above. Further, the network does not always use a full-duplex line, and may use a multiplex line (such as a quadruplex line), or may use a single line.

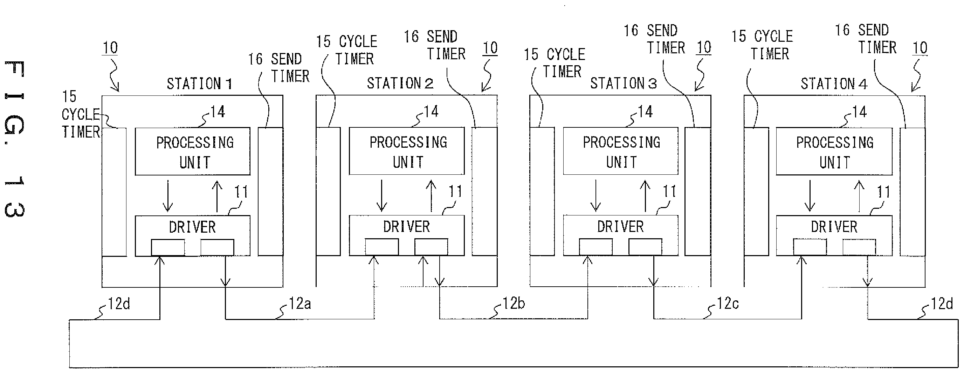

In the case of a single line, as an example, the network has a configuration in which, for example, any one of the respective communication lines 12 and 13 on line A and line B illustrated in FIG. 1 exists. The network has a configuration in which only the communication line 12 exists, for example. Such an exemplary configuration is illustrated in FIG. 13.

In addition, in the case of the single line, in order to synchronize the cycle timers 15 with each other, as an example, first, the cycle timers 15 are synchronized with each other in a duplex-line configuration illustrated in FIG. 1, the configuration is changed to a single-line configuration, and the network is made to operate on a single line. However, the present invention is not limited to this example. As another example, by providing a radio wave clock in each of the nodes 10, and adjusting the cycle timer 15 in each of the nodes 10 to the time of the local radio wave clock, the cycle timers 15 of all of the nodes may be synchronized with each other.

In the case of the single line (here, only line A), basically, the processing of each of the nodes 10 is substantially similar to the processing above of FIG. 2 (a), FIG. 3, FIG. 4, and FIG. 5, but a portion of the processing is different. Namely, first, the process above of step S12 is a process for transmitting data onto only line A. In a reception process, two packets are not received through both lines, and the processes of steps S24 and step S43 are omitted.

By employing the control network system, a node 10 thereof, and the like according to the present invention, all of the nodes 10 that need data exchange can complete mutual data exchange in a shorter time than conventional. Accordingly, in a control system using a control network according to the present invention, the speed of a (periodical) data refreshing cycle can be increased, and the control speed can be increased. Further, the productivity in a customer system can be improved.

By employing the control network system, a node device thereof, and the like according to the present invention, all of the node devices that need data exchange can complete mutual data exchange in a shorter time than conventional. Accordingly, in a control system using a control network according to the present invention, the speed of a (periodical) data refreshing cycle can be increased, and the control speed can be increased. Further, the productivity in a customer system can be improved.

## Claims

1. A control network system in which a plurality of nodes (10) mutually exchange data, each of the plurality of nodes (10) comprising:

   data transmission means (11) for transmitting data of a local node (10) to an adjacent node (10) at a prescribed timing in every prescribed data exchange cycle; and
   relay means (11) for, upon receipt of transmitted data from an arbitrary adjacent node (10), obtaining the transmitted data, and relaying the transmitted data to another adjacent node (10);
   a first timer (16) configured to generate the prescribed timing, wherein
   the first timers (16) of the nodes (10) are configured to start at a same timing, and time-up occurs in the first timers (16) after a same time period has passed such that
   the prescribed timings of the nodes (10) are made to be a same timing.

2. The control network system according to claim 1, each of the plurality of nodes (10) further comprising:

   a second timer (15), wherein
   the data exchange cycle is generated by the second timer, and
   the second timers of all of the plurality of nodes (10) are synchronized with each other.

3. The control network system according to claim 1, wherein
   by setting setting values of the first timers of all of the plurality of nodes (10) to a same value, the prescribed timings generated by the first timers of all of the plurality of nodes (10) are made to be the same timing.

**EP 3 242 445 B1**

**Patentansprüche**

1. Steuernetzwerksystem, in dem mehrere Knoten (10) miteinander Daten austauschen, wobei jeder der mehreren Knoten (10) umfasst:

   Datenübertragungsmittel (11) zum Übertragen von Daten eines lokalen Knotens (10) zu einem benachbarten Knoten (10) zu einer vorgeschriebenen Zeit in jedem vorgeschriebenen Datenaustauschzyklus; und Weiterleitungsmittel (11) zum Erhalten, beim Empfangen von übertragenen Daten von irgendeinem benachbarten Knoten (10), der übertragenen Daten und Weiterleiten der übertragenen Daten an einen anderen benachbarten Knoten (10);
   einen ersten Zeitgeber (16), der konfiguriert ist das vorgeschriebene Timing zu erzeugen, wobei
   die ersten Zeitgeber (16) der Knoten (10) konfiguriert sind zu einem gleichen Timing zu starten, und der Zeitablauf in den ersten Zeitgebern (16) nach Ablauf eines gleichen Zeitraums erfolgt, sodass
   die vorgeschriebenen Timings der Knoten (10) dazu gebracht werden, ein gleiches Timing zu sein.

2. Steuernetzwerksystem nach Anspruch 1, wobei jeder der mehreren Knoten (10) ferner umfasst:

   einen zweiten Zeitgeber (15), wobei
   der Datenaustauschzyklus durch den zweiten Zeitgeber erzeugt wird und
   die zweiten Zeitgeber von allen der mehreren Knoten (10) miteinander synchronisiert sind.

3. Steuernetzwerksystem nach Anspruch 1, wobei
   durch Einstellen von Einstellwerten der ersten Zeitgeber von allen der mehreren Knoten (10) auf einen gleichen Wert die vorgeschriebenen Timings, die von den ersten Zeitgebern von allen der mehreren Knoten (10) erzeugt werden, dazu gebracht werden, das gleiche Timing zu sein.


**Revendications**

1. Système de réseau de commande où une pluralité de nœuds (10) échangent mutuellement des données, chacun de la pluralité de nœuds (10) comprenant:

   un moyen de transmission de données (11) pour transmettre des données d'un nœud local (10) à un nœud adjacent (10) à un moment prescrit dans chaque cycle d'échange de données prescrit; et
   un moyen pour relayer (11) afin de, à réception de données transmises par un nœud adjacent (10) arbitraire, obtenir les données transmises et relayer les données transmises à un autre nœud adjacent (10);
   une première minuterie (16) configurée pour générer le moment prescrit, dans lequel
   les premières minuteries (16) des nœuds (10) sont configurées pour commencer à un même moment, et l'expiration du temps a lieu dans les premières minuteries (16) après l'écoulement d'une même période de temps de manière à ce
   qu'il soit fait en sorte que les moments prescrits des nœuds (10) sont un même moment.

2. Système de réseau de commande selon la revendication 1, chacun de la pluralité des nœuds (10) comprenant en outre :

   une deuxième minuterie (15), dans lequel
   le cycle d'échange de données est généré par la deuxième minuterie, et
   les deuxièmes minuteries de l'ensemble de la pluralité de nœuds (10) sont synchronisées les unes avec les autres.

3. Système de réseau de commande selon la revendication 1, dans lequel
   en définissant des valeurs de réglage des premières minuteries pour l'ensemble de la pluralité des nœuds (10) à une même valeur, il est fait en sorte que les moments prescrits générés par les premières minuteries de l'ensemble de la pluralité des nœuds (10) soient le même moment.

F I G. 1

Send

Rcv

```
S11  RECEIVE
     REQUEST

S12  TRANSMIT
     REQUEST ONTO
     BOTH LINE A
     AND LINE B
```

```
S21  FRAME
     DETERMINATION          NO
     IS TRANSMISSION
     SOURCE ANOTHER
     STATION?
            YES
S22  RELAY                  S23  DISCARD
                                 END
S24  HAS SAME        YES
     FRAME BEEN RECEIVED
     ?
            NO               S26  DISCARD
S25  TRANSFER FRAME TO
     PROCESSING UNIT

     END
```

( a )                       ( b )

F I G. 2

Rcv

S31 — FRAME
DETERMINATION
IS TRANSMISSION
SOURCE ANOTHER
STATION?

NO

S32 — HAS SAME FRAME
BEEN RECEIVED?

YES

S35 — DISCARD

END

S33 — RELAY

NO

YES

S34 — TRANSFER FRAME TO
PROCESSING UNIT

END

F I G. 3

Rcv

S41 — FRAME DETERMINATION HAS FRAME BEEN TRANSMITTED FROM DOWNSTREAM ADJACENT STATION?

YES

NO

S42 — RELAY

S31 — DISCARD

END

S43 — HAS SAME FRAME BEEN RECEIVED?

YES

NO

S44 — TRANSFER FRAME TO PROCESSING UNIT

END

F I G.   4

FIG. 5

EP 3 242 445 B1

21

- CYCLE T. O.
- SEND T. O.
- FRAME RECEPTION
         etc
T. O. : TIME-OUT

S51 AWAIT EVENT

S52 HAS EVENT BEEN GENERATED? — NO

YES

S53 CYCLE T. O.? — NO

YES

S54 SET SEND TIMER

S55 START

S56 SEND T. O.? — NO

YES

S57 TRANSMIT LOCAL-STATION DATA

S58 HAS COMMON-MEMORY FRAME BEEN RECEIVED? — NO

YES

S59 STORE FRAME IN COMMON MEMORY

S60 SYNCHRONIZATION FRAME ADDRESSED TO LOCAL STATION? — NO

YES

S61 SYNCHRONOUS RESPONSE

S62 SYNCHRONIZATION FRAME? — NO

YES

S63 SYNCHRONIZE CYCLE TIMERS

F I G. 6

FIG. 7

F I G. 8

LINEA

STATION1
RECEPTION | 4 | 3 | 3 | 2 | 2 | 2 | ☒
TRANSMISSION | 1 | 4 | 3 | 3 | 2 | 2 | 2

STATION2
RECEPTION | 1 | 4 | 3 | 3 | ☒2 | ☒2 | ☒2
TRANSMISSION | 2 | 2 | 2 | 1 | 4 | 3 | 3

STATION3
RECEPTION | 2 | 2 | 2 | 1 | 4 | ☒3 | ☒3
TRANSMISSION | 3 | 3 | 2 | 2 | 2 | 1 | 4

STATION4
RECEPTION | 3 | 3 | 2 | 2 | 2 | 1 | ☒4
TRANSMISSION | 4 | 3 | 3 | 2 | 2 | 2 | 1

《OPERATION AT TIME OF RECEPTION OF FRAME OF LOCAL STATION》

《OPERATION AT TIME OF RECEPTION OF FRAME OF ANOTHER STATION》

FIG. 9

F I G. 1 0

NODE DEVICE

FIRST TIMER — 51

DATA TRANSMISSION UNIT — 52

RELAY UNIT — 53

SECOND TIMER — 54

CPU, MEMORY, ETC.

F I G. 1 1

F I G. 1 2

F I G. 1 3

F I G.  1 4

F I G. 1 5

F I G. 1 6

**EP 3 242 445 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005159754 A
- WO 2013121568 A
- EP 2410697 A1
- US 2002126661 A1

33